# DEMANDE DE BREVET EUROPEEN

(11) **EP 4 691 647 A1**
(43) Date de publication de la demande: **11.02.2026**
(21) Numéro de dépôt: 25193673.8
(22) Date de dépôt: 04.08.2025
(51) Int. Cl.: B05B 12/00, G05B 19/418, G05B 23/02, G06Q 50/04

(54) **MÉTHODE DE SUIVI D'UNE LIGNE DE PRODUIT DE REVÊTEMENT, ET PRODUIT-PROGRAMME D'ORDINATEUR ASSOCIÉ**

(30) Priorité: 05.08.2024 FR 2408653
(71) Demandeur: Exel Industries, 51200 Epernay (FR)
(72) Inventeur: COGNON, Thibault, 51200 Epernay (FR)
(74) Mandataire: Lavoix

(57) **Abrégé**

La présente invention concerne une méthode de suivi d'une ligne (10) de produit de revêtement, comprenant des équipements (12, 14, 16, 18, 20) et un capteur (22). Au moins deux équipements, dit identifiables, (16, 18, 20) sont pourvus d'un module d'identification (24, 26, 28) apte à communiquer un identifiant respectif, le capteur (22) étant adapté pour mesurer un paramètre au niveau d'un équipement identifiable, dit de base (16).

La méthode comprend les étapes suivantes :
- lecture des identifiants respectifs des équipements identifiables (16, 18, 20),
- construction d'un modèle virtuel de la ligne (10) à partir des identifiants lus,
- réception de données mesurées par le capteur (22), et
- détermination, à partir des données mesurées, de données relatives à un équipement annexe (18, 20) qui est un des équipements identifiables différent de l'équipement de base.

## Description

La présente invention concerne une méthode de suivi d'une ligne de produit de revêtement, en particulier de peinture, la ligne de produit de revêtement comprenant une pluralité d'équipements.

L'invention concerne en outre un produit programme d'ordinateur associé.

On connaît l'utilisation de capteurs sur un équipement pour suivre le fonctionnement dudit équipement.

Toutefois, il convient alors de pourvoir chaque équipement d'intérêt du capteur correspondant, pour avoir un suivi de la ligne de produit de revêtement.

Cependant, la ligne avec l'ensemble des capteurs est alors particulièrement complexe et chère.

Le but de l'invention est alors de proposer une méthode de suivi d'une ligne de produit de revêtement qui limite la complexité et le coût associés pour la ligne.

A cet effet, l'invention a pour objet une méthode de suivi d'une ligne de produit de revêtement, en particulier de peinture, la ligne de produit de revêtement comprenant une pluralité d'équipements et au moins un capteur, caractérisée en ce qu'au moins deux équipements, dit équipements identifiables, de la pluralité d'équipements sont chacun pourvus d'un module d'identification, chaque module d'identification comprenant une mémoire comprenant un identifiant respectif, chaque module d'identification étant apte à communiquer l'identifiant respectif, le capteur étant adapté pour mesurer au moins un paramètre de la ligne de produit de revêtement au niveau d'un des équipements identifiables, dit équipement de base, et en ce que la méthode comprend les étapes suivantes :
- fourniture d'un dispositif d'acquisition comprenant un module de lecture, adapté pour lire les identifiants respectifs des modules d'identification respectifs,
- lecture par le dispositif d'acquisition des identifiants respectifs des équipements identifiables de la ligne de produit de revêtement,
- construction d'un modèle virtuel de la ligne de produit de revêtement à partir des identifiants lus,
- réception de données mesurées par le capteur, et
- détermination, à partir des données mesurées, de données déterminées, les données déterminées étant relatives à au moins un équipement annexe, l'au moins un équipement annexe étant un des équipements identifiables différent de l'équipement de base.

Ainsi, grâce à un unique capteur, il est obtenu des informations pour une pluralité d'équipements. Cela permet un suivi de la ligne de revêtement, sans nécessiter un capteur par équipement d'intérêt.

Suivant d'autres aspects avantageux de l'invention, la méthode comprend une ou plusieurs des caractéristiques suivantes, prises isolément ou suivant toutes les combinaisons techniquement possibles :
- l'équipement de base est relié à l'équipement annexe, la ligne de produit de revêtement étant dépourvu d'embranchement entre l'équipement de base et l'équipement annexe, et, pendant la détermination, les données déterminées étant considérées égales aux données mesurées avec un éventuel décalage temporel ;
- le capteur est adapté pour mesurer la quantité de produit de revêtement traversant l'équipement de base, les données déterminées comprenant la quantité de produit de revêtement traversant l'équipement annexe, la méthode comprenant une étape de suivi de la quantité cumulée de produit de revêtement ayant traversé l'équipement annexe à partir des données déterminées ;
- la méthode de suivi comprend une étape d'émission d'un signal d'alerte lorsque la quantité cumulée de produit de revêtement ayant traversé l'équipement annexe dépasse un seuil ;
- chaque module d'identification comprend une étiquette de Communication en Champ Proche ;
- la méthode de suivi comprend une étape de maintenance à l'aide d'un kit de maintenance, le kit de maintenance étant pourvu d'un module d'identification avec un identifiant respectif ;
- la méthode de suivi comprend les étapes suivantes :
   - remplacement d'un équipement identifiable par un nouvel équipement, le nouvel équipement étant pourvu d'un module d'identification avec un identifiant respectif,
   - lecture de l'identifiant du nouvel équipement par le dispositif d'acquisition, et
   - remplacement dans le modèle virtuel de l'équipement identifiable remplacé par le nouvel équipement ;
- la méthode de suivi comprend une étape de vérification de la conformité de données déterminées avec au moins un critère de l'équipement annexe, le critère comprenant par exemple une valeur maximale et/ou une valeur minimale ;
- la méthode de suivi comprend les étapes suivantes :
   - fourniture d'au moins une pièce à revêtir, la pièce à revêtir étant pourvue d'un module d'identification avec un identifiant respectif, la ligne de produit de revêtement étant pourvue d'un lecteur adapté pour lire l'identifiant de la pièce à revêtir par la ligne de produit de revêtement,
   - détection de l'identifiant de la pièce à revêtir par le lecteur, et
   - détermination de paramètres de revêtement de la pièce à revêtir à partir des données mesurées.

L'invention concerne également un produit-programme d'ordinateur, comprenant des instructions logicielles propres à, lorsqu'elles sont mises en œuvre par ordinateur, mettre en œuvre les étapes de construction, réception et détermination d'une méthode de suivi telle que décrite précédemment.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'un système pour le mode de réalisation de l'invention,
[Fig 2] la figure 2 est une représentation schématique d'étapes d'une méthode selon un premier mode de réalisation de l'invention, et
[Fig 3] la figure 3 est une représentation schématique d'étapes d'une méthode selon un deuxième mode de réalisation de l'invention.

L'invention concerne une méthode de suivi d'une ligne de produit de revêtement, en particulier de peinture.

Le produit de revêtement est, par exemple, fluide.

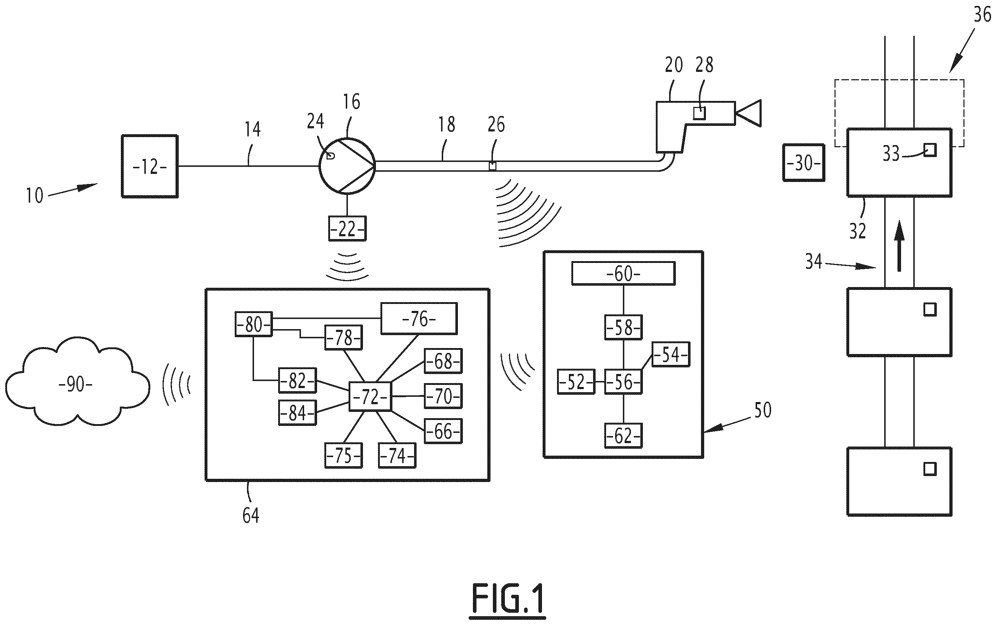

Un exemple de ligne 10 est représenté sur la figure 1.

La ligne représentée est un exemple très simplifié, pour illustrer une méthode de suivi selon l'invention. La ligne n'est pas limitée à l'exemple fourni. En particulier, une ligne de produit de revêtement comprend généralement un système plus complexe.

La ligne 10 comprend une pluralité d'équipements 12, 14, 16, 18, 20 et au moins un capteur 22.

Plus particulièrement, ici, la ligne 10 comprend une source d'alimentation 12, une pompe 16, une voie d'alimentation 14 s'étendant entre la source d'alimentation 12 et la pompe 16, un dispositif d'application 20 du produit de revêtement, et une voie de distribution 18 s'étendant entre la pompe 16 et le dispositif d'application 20.

La pluralité d'équipements 12, 14, 16, 18, 20 est, par exemple, agencée en ligne, en série.

Au moins deux équipements, dit équipements identifiables, 16, 18, 20 de la pluralité d'équipements sont chacun pourvus d'un module d'identification 24, 26, 28.

Ici, la pompe 16, la voie de distribution 18 et le dispositif d'application 20 sont chacun pourvus d'un module d'identification 24, 26, 28.

Chaque module d'identification 24, 26, 28 est, par exemple, agencé au sein de l'équipement identifiable correspondant.

Plus particulièrement, chaque module d'identification 24, 26, 28 n'est pas accessible depuis l'extérieur de l'équipement identifiable.

Alternativement ou additionnellement, chaque module d'identification 24, 26, 28 est fixé sur l'équipement indentifiable, à l'extérieur.

Chaque module d'identification 24, 26, 28 comprend une mémoire comprenant un identifiant respectif. L'identifiant respectif est propre à l'équipement identifiable.

L'identifiant respectif permet, par exemple, d'identifier la nature de l'équipement correspondant.

Chaque module d'identification 24, 26, 28 est apte à communiquer l'identifiant respectif.

Chaque module d'identification 24, 26, 28 comprend, par exemple, une étiquette RFID de l'anglais « radio frequency identification » ou, en français, de radio-identification.

Plus particulièrement, chaque module d'identification 24, 26, 28 comprend une étiquette de Communication en Champ Proche ou CCP ou NFC de l'anglais « near-field communication ».

Cela permet ainsi une détection à distance de l'étiquette souhaitée.

L'utilisation de la CCP permet, en outre, de pouvoir lire de manière sûre et très sélective l'étiquette souhaitée en se rapprochant de l'équipement correspondant.

Chaque étiquette comprend une antenne adaptée pour communiquer et une mémoire stockant l'identifiant respectif.

Alternativement, un ou chaque module d'identification 24, 26, 28 comprend, par exemple, un identifiant visuel, par exemple un QR code ou un identifiant alphanumérique, par exemple le numéro de série de l'équipement indentifiable.

Le capteur 22 est adapté pour mesurer au moins un paramètre de la ligne 10 au niveau d'un des équipements identifiables 16, 18, 20, dit équipement de base 16.

Le capteur 22 est, par exemple, adapté pour mesurer la quantité de produit de revêtement traversant l'équipement de base 16, par exemple une pompe de la ligne 10.

Le capteur 22 comprend, par exemple, un débitmètre.

Le capteur 22 est, par exemple, apte à mesurer les coups de pompe de la pompe et à calculer la quantité de produit de revêtement traversant la pompe, ici la pompe 16.

Additionnellement ou alternativement, le capteur 22 mesure la pression du produit de revêtement traversant l'équipement de base 16.

Au moins un équipement indentifiable 18, 20 est dépourvu d'un capteur mesurant l'au moins un paramètre.

L'équipement de base 16 est relié à au moins un équipement annexe 20, l'équipement annexe 20 étant un des équipements identifiables 16, 18, 20 différent de l'équipement de base 16.

L'équipement annexe 20 est dépourvu d'un capteur mesurant l'au moins un paramètre.

La ligne 10 est, par exemple, dépourvu d'embranchement entre l'équipement de base 16 et l'équipement annexe 20.

Ainsi, l'ensemble du produit de revêtement traversant l'équipement de base 16 traverse, avec un décalage temporaire, l'équipement annexe 20.

Dans un mode de réalisation particulier, la ligne 10 est pourvue d'un lecteur 30 adapté pour lire un identifiant respectif d'un module d'identification 33 d'une pièce à revêtir 32 par la ligne de produit de revêtement.

Le lecteur 30 est, plus particulièrement, adapté pour lire un identifiant respectif d'une pièce à revêtir 32 agencée en regard d'un dispositif d'application 20 de la ligne 10.

Le lecteur 30 est, par exemple, agencé en amont d'un emplacement de revêtement 36, où la pièce à revêtir est revêtue du produit de la ligne 10, de manière adjacente à l'emplacement de revêtement 36.

Les pièces à revêtir sont, par exemple, amenées successivement par une ligne de pièces 34 à l'emplacement de revêtement 36.

Le lecteur 30 est, par exemple, agencé en regard de la ligne de pièces 34, en amont de l'emplacement de revêtement 36, de manière adjacente à l'emplacement de revêtement 36.

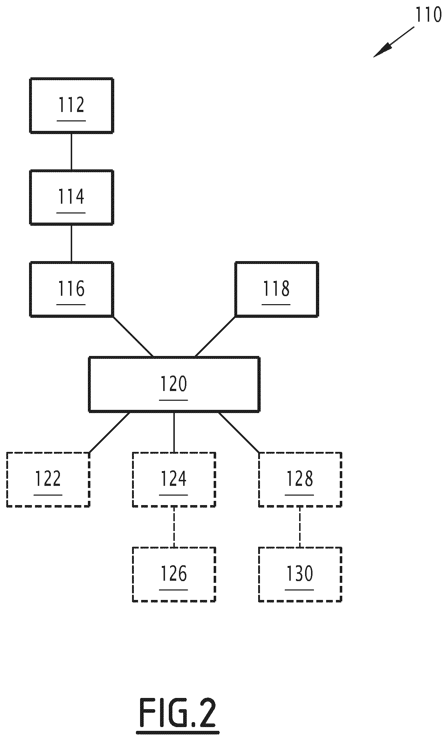

Un exemple de mode de réalisation d'une méthode de suivi d'une ligne de produit de revêtement va maintenant être décrit en regard de la figure 2, illustré par l'exemple de système de la figure 1.

La méthode de suivi 110 comprend les étapes suivantes :
- fourniture 112 d'un dispositif d'acquisition 50,
- lecture 114 par le dispositif d'acquisition 50 des identifiants respectifs des équipements identifiables de la ligne de produit de revêtement,
- construction 116 d'un modèle virtuel de la ligne de produit de revêtement à partir des identifiants lus,
- réception 118 de données mesurées par le capteur, et
- détermination 120, à partir des données mesurées, de données déterminées.

Un exemple de dispositif d'acquisition 50, ici un dispositif électronique, est représenté sur la figure 1.

Le dispositif d'acquisition 50 est, par exemple, un dispositif électronique portable.

Le dispositif d'acquisition 50 comprend un module de lecture 52, adapté pour lire les identifiants respectifs des modules d'identification respectifs.

Le module de lecture 52 est, par exemple, un lecteur RFID, plus particulièrement NFC.

Le module de lecture 52 comprend, par exemple, un émetteur-récepteur radiofréquence, adapté pour émettre une requête vers un module d'identification, plus particulièrement une étiquette RFID, ici NFC, et recevoir, en réponse, l'identifiant du module d'identification.

Le dispositif d'acquisition 50 comprend, en outre, une unité de traitement d'informations formée par exemple d'une mémoire 54 et d'un processeur 56 associé à la mémoire 54.

Le dispositif d'acquisition 50 comprend, par exemple, en outre un module d'interface 58 apte à recevoir des informations d'un utilisateur.

Le dispositif d'acquisition 50 comprend ici une interface utilisateur 60, par exemple un écran tactile et/ou des boutons et/ou un système sonore.

L'interface utilisateur 60 comprend, par exemple, un dispositif d'affichage, ici l'écran tactile.

Le module d'interface 58 est apte à recevoir les informations fournis par un utilisateur par l'intermédiaire de l'interface utilisateur 60 et, par exemple, en outre à afficher des éléments sur le dispositif d'affichage et/ou à émettre un signal sonore par le système sonore.

Le dispositif d'acquisition 50 comprend, par exemple, en outre un module de communication 62.

Le module de communication 62 est, par exemple, apte à permettre une communication entre le dispositif d'acquisition 50 et un dispositif électronique 64, par exemple un ordinateur, plus particulièrement par télécommunication, par exemple par Bluetooth ^{®}, ou par liaison filaire, ou par le réseau de téléphonie mobile.

Le module de lecture 52, ainsi qu'en complément facultatif le module d'interface 58 et/ou le module de communication 62, sont réalisés chacun sous forme d'un logiciel, ou d'une brique logicielle, exécutable par le processeur 56. La mémoire 54 du dispositif électronique d'acquisition 50 est alors apte à stocker un logiciel de lecture, ainsi qu'en complément facultatif un logiciel d'interface et/ou un logiciel de communication. Le processeur est alors apte à exécuter chacun des logiciels parmi le logiciel de lecture, ainsi qu'en complément facultatif le logiciel d'interface et/ou le logiciel de communication.

En variante non représentée, le module de lecture 52, ainsi qu'en complément facultatif le module d'interface 58 et/ou le module de communication 62, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque le dispositif électronique d'acquisition est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support est un support non transitoire. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Pendant la lecture 114, le dispositif d'acquisition 50 lit, par exemple successivement, l'ensemble des identifiants respectifs des équipements identifiables 16, 18, 20 de la ligne 10.

Plus particulièrement, un utilisateur approche successivement le dispositif d'acquisition 50 de chaque équipement identifiable 16, 18, 20, de sorte à permettre la lecture de l'identifiant du module d'identification 24, 26, 28 de chaque équipement identifiable 16, 18, 20.

Le dispositif d'acquisition 50 stocke alors les identifiants lus dans sa mémoire 56.

Lorsque le dispositif d'acquisition 50 lit l'identifiant d'un module d'identification 24, 26, 28, il émet, par exemple, un signal indiquant à l'utilisateur la détection, par exemple un signal visuel et/ou un signal sonore.

L'utilisateur comprend alors que l'équipement identifiable a été identifié par le dispositif d'acquisition et se déplace alors vers un autre équipement identifiable, jusqu'à avoir identifier l'ensemble des équipements identifiables.

Dans un mode de réalisation particulier, lorsque le dispositif d'acquisition 50 lit l'identifiant d'un module d'identification 24, 26, 28, le dispositif d'acquisition 50 affiche sur le dispositif d'affichage une ou des informations relatives à l'équipement identifiable correspondant, par exemple la nature de l'équipement identifiable et/ou l'identifiant correspondant.

Dans un mode de réalisation, le dispositif d'affichage affiche la liste de la ou des informations de l'ensemble des équipements identifiables dont l'identifiant a été lu par le dispositif d'acquisition.

Alternativement, seul la ou les informations relatives au dernier équipement identifiable dont l'identifiant a été lu sont affichées.

Dans un mode de réalisation particulier, si plusieurs équipements identifiables sont détectés en même temps, alors les identifiants lus sont tous sauvegardés dans la mémoire 56. Alternativement, le dispositif d'acquisition 50 attend qu'un unique équipement identifiable soit détecté à un moment donné pour sauvegarder l'identifiant lu.

Dans un mode de réalisation particulier, pendant l'étape de lecture, la méthode comprend une sous-étape de réception, par le dispositif d'acquisition, de données relatives à la liaison entre les équipements identifiables 16, 18, 20 dont l'identifiant est lu.

Plus particulièrement, pendant l'étape de lecture, un utilisateur fournit, par l'intermédiaire de l'interface utilisateur 60, des informations sur la liaison entre les équipements identifiables 16, 18, 20 dont l'identifiant est lu.

Les données relatives à la liaison entre les équipements identifiables 16, 18, 20 dont l'identifiant est lu sont sauvegardées dans la mémoire 54.

Dans l'exemple représenté, le dispositif d'acquisition 50 lit, par exemple, l'identifiant de la pompe 16, puis celui de la voie de distribution 18. L'utilisateur indique, alors, par exemple, que la voie de distribution 18 est reliée en série à la pompe 16. Puis le dispositif d'acquisition lit ensuite l'identifiant du dispositif d'application 20. L'utilisateur indique alors que le dispositif d'application 20 est relié en série à la voie de distribution 18, de l'autre côté par rapport à la pompe 16.

Alternativement, l'étape de lecture ne comprend pas de sous-étape de réception, par le dispositif d'acquisition, de données relatives à la liaison entre les équipements identifiables dont l'identifiant est lu.

L'étape de construction 116 est, par exemple, mise en œuvre par un module de construction 66 d'un dispositif électronique 64, différent du dispositif d'acquisition 50.

Ici, le dispositif électronique 64 comprend le module de construction 66.

Le dispositif électronique 64 comprend, en outre, un module de communication 68 compatible avec la technologie de communication du module de communication 62 du dispositif d'acquisition 50.

Le dispositif électronique 64 comprend une unité de traitement d'informations formée par exemple d'une mémoire 70 et d'un processeur 72 associé à la mémoire 70.

La méthode comprend alors une étape de transmission des identifiants lus, et le cas échéant des données relatives à la liaison entre les équipements identifiables 16, 18, 20 dont l'identifiant est lu, du dispositif d'acquisition 50 au dispositif électronique 64, par l'intermédiaire des modules de communication 62, 68.

Pendant l'étape de construction 116, un modèle virtuel de la ligne 10 est réalisé à partir des identifiants lus, et le cas échéant des données relatives à la liaison entre les équipements identifiables 16, 18, 20 dont l'identifiant est lu.

En l'absence de données relatives à la liaison entre les équipements identifiables 16, 18, 20 dont l'identifiant est lu, les équipements identifiables de la ligne sont, par exemple, considérées comme reliés les uns aux autres, en série, plus particulièrement sans embranchement.

Le modèle virtuel de la ligne 10 comprend une représentation de chaque équipement identifiable 16 et au moins un lien entre les représentations des équipements identifiables.

Le modèle virtuel comprend, par exemple, des liens mathématiques entre des éléments représentant chacun un équipement identifiable.

Le modèle virtuel de la ligne 10 comprend, par exemple, un tableau, chaque équipement identifiable correspondant à une colonne (alternativement une ligne), les colonnes (alternativement les lignes) étant liées entre elles, par exemple par des liens mathématiques entre des cellules des colonnes (alternativement des lignes).

Au moins une partie des cellules représente, par exemple, un paramètre relatif à l'équipement identifiable correspondant, par exemple considéré à un moment donné.

Une ligne (alternativement une colonne) représente, par exemple, le même paramètre pour l'ensemble des équipements identifiables.

Par exemple, lorsque deux équipements identifiables sont considérés reliés en ligne sans embranchement, alors il est, par exemple, considéré que, dans le modèle virtuel, au moins une cellule de chacune des colonnes (alternativement lignes) correspondant auxdits éléments sont égales entre elles, éventuellement avec un décalage temporaire, plus particulièrement égales entre elles pour une même ligne (alternativement colonne).

Additionnellement ou alternativement, lorsque deux équipements identifiables sont considérés reliés en ligne sans embranchement, alors il est, par exemple, considéré que, dans le modèle virtuel, au moins une cellule de chacune des colonnes (alternativement lignes) correspondant auxdits éléments sont égales entre elles à un coefficient prédéterminé près, éventuellement avec un décalage temporaire, plus particulièrement égales entre elles au coefficient prédéterminé près pour une même ligne (alternativement colonne).

Le décalage temporaire correspond ici, par exemple, au temps pour l'écoulement du produit de revêtement d'amont vers l'aval, entre l'équipement de base et l'équipement annexe.

Alternativement, la ligne de produit de revêtement comprend au moins un embranchement en Y, comprenant deux entrées et une sortie. La ligne comprend, par exemple, un équipement de base sur chacune des entrées et un équipement annexe après la sortie. Le lien mathématique est alors, par exemple, une addition, éventuellement avec un décalage temporaire, et éventuellement à un coefficient prédéterminé près.

Alternativement, la ligne de produit de revêtement comprend au moins un embranchement en Y, comprenant une entrée et deux sortie. La ligne comprend, par exemple, un équipement de base sur au moins deux des trois voies formées par l'entrée et les deux sorties et un équipement annexe sur l'autre voie. Le lien mathématique est alors, par exemple, une addition ou une soustraction, éventuellement avec un décalage temporaire, et éventuellement à un coefficient prédéterminé près.

Le modèle virtuel, ici le tableau, est, par exemple, sauvegardé dans la mémoire 70.

Le dispositif électronique 64 comprend en outre un module de réception 74, le module de réception 74 étant adapté pour recevoir des données de l'au moins un capteur 22, les données comprenant les mesures de l'au moins un paramètre mesuré par l'au moins un capteur 22.

Pendant la réception des données mesurées, au moins une partie des mesures acquises par le capteur 22 sont reçues, ici par le dispositif électronique 64, ici par le module de réception 74.

Les données mesurées sont alors, par exemple, intégrées dans le tableau dans la colonne (alternativement la ligne) correspondant à l'équipement identifiable pourvu du capteur 22 ayant effectué ladite mesure.

Plus particulièrement, les cellules correspondant au paramètre correspondant aux mesures effectuées par le capteur 22 sont remplies dans le tableau.

Pendant la détermination, des données déterminées sont calculées pour l'au moins un équipement annexe à partir des données mesurées, par exemple par un module de détermination des données 75, plus particulièrement du dispositif électronique 64.

Ici, par exemple, des données sont déterminées pour le dispositif d'application 20 à partir des données mesurées par le capteur 22.

Plus particulièrement, par les liens entre les représentations des équipements identifiables, il est calculée les données déterminées à partir des données mesurées.

Par exemple, la détermination comprend le remplissage des cellules dans le tableau correspondant à l'équipement annexe à partir des cellules correspondant à l'équipement de base, grâce aux liens mathématiques.

Les données déterminées sont, par exemple, égales aux données mesurées, avec un éventuel décalage temporel, en particulier lorsque l'équipement annexe est relié en ligne avec l'équipement de base sans embranchement.

Alternativement ou additionnellement, en considérant une partie uniquement des données déterminées, les données déterminées sont, par exemple, égales à la multiplication des données mesurées par le coefficient prédéterminé, avec un éventuel décalage temporel.

Alternativement, les données déterminées sont, par exemple, égales à une addition ou une soustraction de données mesurées, avec un éventuel décalage temporel, et éventuellement avec une multiplication avec un coefficient prédéterminé près, de différents équipements de base, en particulier lorsque la ligne présente au moins un embranchement entre les équipements de base et l'équipement annexe, chacun des équipements de base et de l'équipement annexe étant alors sur une branche de l'embranchement.

Les données déterminées comprennent, par exemple, la quantité de produit de revêtement traversant l'équipement annexe, plus particulièrement le débit volumétrique ou alternativement massique.

Alternativement ou additionnellement, les données déterminées comprennent, par exemple, la pression au niveau de l'équipement annexe.

La méthode de suivi comprend, en outre, facultativement, une étape d'affichage des données déterminées, et éventuellement des données mesurées, par un dispositif d'affichage 76 du dispositif électronique 64.

La méthode de suivi comprend, en outre, facultativement, une étape de suivi de la quantité cumulée 124 de produit de revêtement ayant traversé l'équipement annexe à partir des données déterminées, plus particulièrement par un module de surveillance 78, par exemple compris dans le dispositif électronique 64.

Cela permet de suivre l'utilisation et l'usure de l'équipement annexe.

La méthode de suivi comprend, alors, par exemple, également, une étape d'émission d'un signal d'alerte 126 lorsque la quantité cumulée de produit de revêtement ayant traversé l'équipement annexe dépasse un seuil, par exemple par un module d'alerte 80, ici relié au module de surveillance 78, par exemple compris dans le dispositif électronique 64.

Le signal d'alerte est, par exemple, un signal visuel, par exemple une alerte sur le dispositif d'affichage 76, et/ou sonore.

Cela permet ainsi de prévenir pour prévoir une maintenance.

Le signal d'alerte indique, par exemple, la maintenance à réaliser, et par exemple, un type de kit de maintenance à utiliser en fonction de l'équipement concernée et la maintenance.

La méthode de suivi comprend, en outre, facultativement, une étape de vérification 128 de la conformité de données déterminées avec au moins un critère de l'équipement annexe, le critère comprenant par exemple une valeur maximale et/ou une valeur minimale, par exemple par un module de conformité 82, par exemple compris dans le dispositif électronique 64.

Cela permet de vérifier si l'équipement annexe est utilisé conformément à son utilisation souhaitée, notamment dans des gammes de fonctionnement conseillées.

La méthode de suivi comprend, alors, par exemple, également, une étape d'émission d'un signal d'alerte 130 lorsque lesdites données déterminées ne sont pas conformes au(x) critère(s), par exemple par le module d'alerte 80, ici également relié au module de conformité 82.

Plus particulièrement ici, les données déterminées comprennent la pression au niveau de l'équipement annexe, le critère étant, par exemple, une pression maximale à ne pas dépasser au niveau de l'équipement annexe.

Alternativement, les étapes de construction 116, et/ou de réception 118 et/ou détermination 120, et éventuellement d'affichage 122 et/ou de suivi de la quantité cumulée 124 et/ou d'émission d'un signal d'alerte 126 et/ou de vérification 128 et/ou d'émission d'un signal d'alerte 130, sont directement mises en œuvre par des modules correspondant du dispositif d'acquisition 50.

Dans un mode de réalisation particulier, la méthode de suivi comprend une étape de maintenance à l'aide d'un kit de maintenance, le kit de maintenance étant pourvu d'un module d'identification avec un identifiant respectif.

L'étape de maintenance comprend, par exemple, la lecture de l'identifiant correspondant au kit de maintenance, par exemple par le dispositif d'acquisition 50 ou un dispositif d'acquisition similaire au dispositif d'acquisition 50, plus particulièrement le module de lecture 52.

L'identifiant permet notamment d'identifier le type de kit de maintenance.

L'étape de maintenance comprend, alors, par exemple, une étape d'émission d'une alerte si le kit de maintenance ne correspond pas au type de kit de maintenance pour réaliser la maintenance souhaitée ou indiquée suite à une alerte.

La méthode de suivi comprend, par exemple, une étape de transmission de l'identifiant du kit de maintenance au dispositif électronique 64, plus particulièrement par l'intermédiaire des modules de communication 62, 68, et une étape de mémorisation dudit identifiant du kit de maintenance dans la mémoire 70.

Cela permet notamment d'avoir un suivi de la maintenance des équipements de la ligne de produit de revêtement.

Cela permet, par exemple, de vérifier que les maintenances ont bien été réalisées avec un kit de maintenance adéquat et validé par le fournisseur de la ligne de produit de revêtement.

Dans un mode de réalisation particulier, la méthode de suivi comprend les étapes suivantes :
- remplacement d'un équipement identifiable par un nouvel équipement, le nouvel équipement étant pourvu d'un module d'identification avec un identifiant respectif,
- lecture de l'identifiant du nouvel équipement par le dispositif d'acquisition ou un dispositif d'acquisition similaire au dispositif d'acquisition 50, plus particulièrement par le module de lecture,
- ici, transmission de l'identifiant du nouvel équipement au dispositif électronique 64, plus particulièrement par l'intermédiaire des modules de communication 62, 68, et ici une mémorisation dudit identifiant du nouvel équipement dans la mémoire 70, et
- remplacement dans le modèle virtuel de l'équipement identifiable remplacé par le nouvel équipement, plus particulièrement par le module de construction 66.

La méthode de suivi comprend, par exemple, une étape d'émission d'une alerte si le nouvel équipement n'est pas un équipement possible pour le remplacement de l'équipement identifiable correspondant.

Cela permet donc de prendre en compte le changement éventuel d'équipement(s) dans la ligne de produit de revêtement, et pour le suivi en particulier de l'équipement remplacé.

Dans l'étape de suivi de la quantité cumulée 124, le cas échéant, la quantité cumulée de produit de revêtement ayant traversé l'équipement annexe est, par exemple, réinitialisée à zéro suite au remplacement dudit équipement annexe.

Cela permet, en outre, de vérifier que les remplacements ont été réalisés avec des équipements adéquats et validés par le fournisseur de la ligne de produit de revêtement.

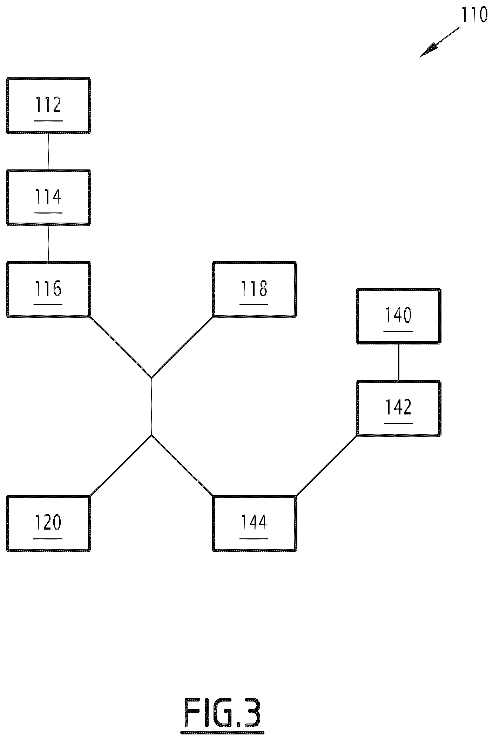

Dans un mode de réalisation particulier, représenté à la figure 3, la méthode de suivi comprend les étapes suivantes :
- fourniture 140 d'au moins une pièce à revêtir 32, la pièce à revêtir 32 étant pourvue d'un module d'identification 33 avec un identifiant respectif,
- détection 142 de l'identifiant respectif par le lecteur 30,
- ici, transmission de l'identifiant par le lecteur 30 au dispositif électronique 64, plus particulièrement par l'intermédiaire du module de communication 68, et ici une mémorisation dudit identifiant dans la mémoire 70, et
- détermination de paramètres de revêtement 144 de la pièce à revêtir 32 à partir des données mesurées, plus particulièrement par un module de détermination de revêtement 84, plus particulièrement du dispositif électronique 64.

Les paramètres de revêtement 144 comprennent, par exemple, la quantité de produit de revêtement appliqué sur la pièce à revêtir et/ou le débit du produit de revêtement pendant le revêtement de la pièce à revêtir.

La détermination est, par exemple, réalisée à partir des données mesurées pendant la durée correspondant à l'intervalle de revêtement de la pièce, à un éventuel décalage temporaire près, le décalage temporaire correspondant à l'intervalle de temps pour l'écoulement du produit de revêtement entre l'équipement de base et son revêtement sur la pièce à revêtir 32.

La méthode comprend, par exemple, une étape d'émission d'une alerte si les paramètres de revêtement ne sont pas conformes à des valeurs prédéterminées, par exemple par le module d'alerte 80.

Cela permet notamment de suivre les paramètres de revêtement avec lesquels ont été revêtues les différentes pièces à revêtir, et à associer chaque pièce aux paramètres correspondants.

De plus, en cas d'erreur dans le revêtement identifié ultérieurement, cela permet d'identifier rapidement les pièces concernées par l'erreur.

Dans un mode de réalisation particulier, la méthode de suivi comprend en outre une étape de sauvegarde des données déterminées, en particulier dans le « cloud » 90, plus particulièrement de l'ensemble des données présentes dans la mémoire 70.

Le module de construction 66, le module de réception 74 et le module de détermination des données 75, ainsi qu'en complément facultatif le module de communication 58, le module de surveillance 78, le module d'alerte 80, le module de conformité 82 et/ou le module de détermination de revêtement 84, sont réalisés chacun sous forme d'un logiciel, ou d'une brique logicielle, exécutable par le processeur. La mémoire du dispositif électronique 64 est alors apte à stocker un logiciel de construction, un logiciel de détermination des données, et un logiciel de réception, ainsi qu'en complément facultatif un logiciel de communication, un logiciel de surveillance, un logiciel d'alerte, un logiciel de vérification de la conformité et/ou un logiciel de détermination de revêtement. Le processeur est alors apte à exécuter chacun des logiciels ci-dessus.

En variante non représentée, le module de construction 66, le module de réception 74 et le module de détermination des données 75, ainsi qu'en complément facultatif le module de communication 58, le module de surveillance 78, le module d'alerte 80, le module de conformité 82 et/ou le module de détermination de revêtement 84, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque le dispositif électronique 64 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. Le support est un support non transitoire. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

L'invention concerne en outre un produit-programme d'ordinateur, comprenant des instructions logicielles propres à, lorsqu'elles sont mises en œuvre par ordinateur, mettre en œuvre les étapes de construction, réception et détermination de la méthode de suivi décrite précédemment.

## Revendications

1. Méthode de suivi d'une ligne (10) de produit de revêtement, en particulier de peinture, la ligne (10) de produit de revêtement comprenant une pluralité d'équipements (12, 14, 16, 18, 20) et au moins un capteur (22), **caractérisée en ce qu'**au moins deux équipements, dit équipements identifiables, (16, 18, 20) de la pluralité d'équipements (12, 14, 16, 18, 20) sont chacun pourvus d'un module d'identification (24, 26, 28), chaque module d'identification (24, 26, 28) comprenant une mémoire comprenant un identifiant respectif, chaque module d'identification (24, 26, 28) étant apte à communiquer l'identifiant respectif, le capteur (22) étant adapté pour mesurer au moins un paramètre de la ligne (10) de produit de revêtement au niveau d'un des équipements identifiables, dit équipement de base (16), et **en ce que** la méthode (110) comprend les étapes suivantes :
- fourniture (112) d'un dispositif d'acquisition (50) comprenant un module de lecture (52), adapté pour lire les identifiants respectifs des modules d'identification respectifs (24, 26, 28),
- lecture (114) par le dispositif d'acquisition (50) des identifiants respectifs des équipements identifiables (16, 18, 20) de la ligne (10) de produit de revêtement,
- construction (116) d'un modèle virtuel de la ligne (10) de produit de revêtement à partir des identifiants lus,
- réception (118) de données mesurées par le capteur (22), et
- détermination (120), à partir des données mesurées, de données déterminées, les données déterminées étant relatives à au moins un équipement annexe (18, 20), l'au moins un équipement annexe (18, 20) étant un des équipements identifiables (16, 18, 20) différent de l'équipement de base (16).

2. Méthode de suivi selon la revendication 1, dans laquelle l'équipement de base (16) est relié à l'équipement annexe (18, 20), la ligne (10) de produit de revêtement étant dépourvu d'embranchement entre l'équipement de base (16) et l'équipement annexe (18, 20), et, pendant la détermination, les données déterminées étant considérées égales aux données mesurées avec un éventuel décalage temporel.

3. Méthode de suivi selon la revendication 1 ou 2, dans laquelle le capteur (22) est adapté pour mesurer la quantité de produit de revêtement traversant l'équipement de base (16), les données déterminées comprenant la quantité de produit de revêtement traversant l'équipement annexe (18, 20), la méthode comprenant une étape de suivi de la quantité cumulée (124) de produit de revêtement ayant traversé l'équipement annexe (18, 20) à partir des données déterminées.

4. Méthode de suivi selon la revendication 3, comprenant une étape d'émission d'un signal d'alerte (126) lorsque la quantité cumulée de produit de revêtement ayant traversé l'équipement annexe (18, 20) dépasse un seuil.

5. Méthode de suivi selon l'une quelconque des revendications 1 à 4, dans laquelle chaque module d'identification (24, 26, 28) comprend une étiquette de Communication en Champ Proche.

6. Méthode de suivi selon l'une quelconque des revendications 1 à 5, comprenant une étape de maintenance à l'aide d'un kit de maintenance, le kit de maintenance étant pourvu d'un module d'identification avec un identifiant respectif.

7. Méthode de suivi selon l'une quelconque des revendications 1 à 6, comprenant les étapes suivantes :
- remplacement d'un équipement identifiable (16, 18, 20) par un nouvel équipement, le nouvel équipement étant pourvu d'un module d'identification avec un identifiant respectif,
- lecture de l'identifiant du nouvel équipement par le dispositif d'acquisition (50), et
- remplacement dans le modèle virtuel de l'équipement identifiable remplacé par le nouvel équipement.

8. Méthode de suivi selon l'une quelconque des revendications 1 à 7, comprenant une étape de vérification de la conformité (128) de données déterminées avec au moins un critère de l'équipement annexe (18, 20), le critère comprenant par exemple une valeur maximale et/ou une valeur minimale.

9. Méthode de suivi selon l'une quelconque des revendications 1 à 8, comprenant les étapes suivantes :
- fourniture (140) d'au moins une pièce à revêtir (32), la pièce à revêtir (32) étant pourvue d'un module d'identification (33) avec un identifiant respectif, la ligne (10) de produit de revêtement étant pourvue d'un lecteur (30) adapté pour lire l'identifiant de la pièce à revêtir (32) par la ligne (10) de produit de revêtement,
- détection (142) de l'identifiant de la pièce à revêtir (32) par le lecteur (30), et
- détermination de paramètres de revêtement (144) de la pièce à revêtir (32) à partir des données mesurées.

10. Produit-programme d'ordinateur, comprenant des instructions logicielles propres à, lorsqu'elles sont mises en œuvre par ordinateur, mettre en œuvre les étapes de construction, réception et détermination d'une méthode de suivi (110) selon l'une quelconque des revendications 1 à 9.
